(19) Europäisches Patentamt
European Patent Office
Office européen des brevets

(11) Veröffentlichungsnummer: **0 256 469**
**A2**

# (12) EUROPÄISCHE PATENTANMELDUNG

(21) Anmeldenummer: **87111532.5**

(22) Anmeldetag: **10.08.87**

(51) Int. Cl.⁴: **C08G 59/54**, C08G 59/64, C07C 103/44

(30) Priorität: **18.08.86 DE 3627924**

(43) Veröffentlichungstag der Anmeldung: **24.02.88 Patentblatt 88/08**

(84) Benannte Vertragsstaaten: **AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Artiga González, Renè-Andrés, Dr.**
**Bilker Allee 10**
**D-4000 Düsseldorf 1(DE)**
Erfinder: **Budnowski, Manfred, Dr.**
**Am Nettchesfeld 53**
**D-4000 Düsseldorf 13(DE)**
Erfinder: **Herold, Julius, Dr.**
**Marie-Curie-Strasse 2**
**D-4019 Monheim(DE)**
Erfinder: **Rutzen, Horst, Dr.**
**Falkenweg 12**
**D-4018 Langenfeld(DE)**
Erfinder: **Schneider, Eberhard**
**Marie-Curie-Strasse 7**
**D-4019 Monheim(DE)**
Erfinder: **Seltmann, Hans-Günter, Dr.**
**Oranienberger Strasse 100**
**D-4000 Düsseldorf 13(DE)**

## (54) Verwendung von Aminofettsäureamiden als Vernetzungsmittel.

(57) Verwendung von Aminohydroxyfettsäureamiden herstellbar durch Kondensation aus epoxidierten Fettsäurealkylestern und mehrwertigen aliphatischen Oligoaminen als Vernetzungsmittel für mehrfunktionelle Epoxidverbindungen, die insbesondere als Klebstoffe und/oder Überzugsmittel eingesetzt werden können.

EP 0 256 469 A2

## Verwendung von Aminofettsäureamiden als Vernetzungsmittel

Die Erfindung betrifft die Verwendung von Aminohydroxyfettsäureamiden, in denen Amino-und Hydroxygruppierungen in vicinaler Stellung an der Alkylkette angeordnet sind, als Vernetzungsmittel für Epoxidverbindungen, insbesondere für Reaktionsklebstoffe auf der Basis von mehrfunktionellen Epoxidverbindungen.

Aliphatische Amine, insbesondere substituierte aliphatische Polyamine sind als typische Vernetzer für mehrfunktionelle Epoxidverbindungen seit jeher die Mittel der Wahl. Besondere Bedeutung unter ihnen haben die Polyaminoamide von Fettsäuren, deren Kondensation so geführt werden kann, daß neben den Bestandteilen der dimerisierten Fettsäure auch Imidazolinringe im Molekül entstehen. Durch die im Molekül vorhandenen Dimerfettsäureanteile erreicht man eine Flexibilisierung des aus mehrfunktioneller Epoxidverbindung und Aminvernetzer entstehenden Makromoleküls.

Der vorliegenden Erfindung lag die Aufgabe zugrunde, eine weitere Gruppe von substituierten Polyamiden zu finden, die noch weitere funktionelle Gruppen im Molekül enthalten, welche sich ebenfalls günstig auf die Härtung bzw. die Vernetzungsreaktion der Epoxidverbindungen auswirken würde.

Gegenstand der vorliegenden Erfindung ist die Verwendung von Aminohydroxyfettsäureamiden, herstellbar durch Kondensation aus epoxidierten Fettsäurealkylestern und mehrwertigen aliphatischen Oligomeren als Vernetzungsmittel für mehrfunktionelle Epoxidverbindungen. Insbesondere bezieht sich die Erfindung auf die Verwendung von Aminohydroxyfettsäureamiden der Formel I

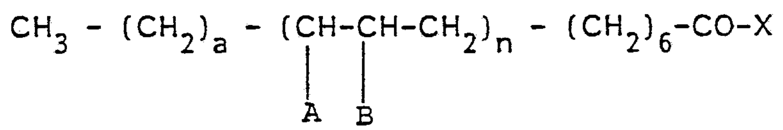

I

in der die Kombinationen n = 1 und a = 7, oder n = 2 und a = 4, oder n = 3 und a = 1 gelten und von den Substituenten A und B jeweils einer eine Hydroxylgruppe bedeutet, während der verbleibende Substituent B oder A und der Substituent X einen Rest der Formel II darstellt,

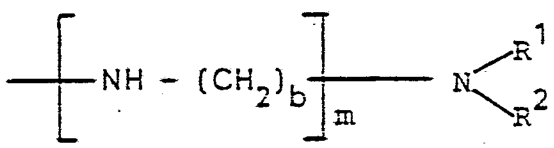

II

in der b ganze Zahlen von 2 bis 6, m 1 oder 2, $R^1$ und $R^2$ unabhängig voneinander Wasserstoff oder einen Alkylrest mit 1 bis 12 Kohlenstoffatomen bedeuten, als Vernetzungsmittel für mehrfunktionelle Epoxidverbindung.

Es hat sich als günstig erwiesen, Aminohydroxystearinsäureamide gemäß der vorstehenden Formel als Vernetzungsmittel (Härter für Klebstoffe und/oder Überzugsmittel) auf der Basis von Epoxidharzen zu verwenden. Dabei erscheint es wiederum zweckmäßig, die Aminohydroxystearinsäureamide in einer solchen Menge zu verwenden, daß auf 100 Epoxidäquivalente etwa 90 bis 150 Aminäquivalente entfallen. Bei den zu verwendenden Aminohydroxyfettsäureamiden handelt es sich um an sich bekannte Verbindungen. Zu ihrer Herstellung bedient man sich bekannter Methoden und bezüglich ihrer Synthese werden nachstehende Erläuterungen gegeben.

Die Verbindungen der Formel I werden zweckmäßigerweise durch Umsetzen von Epoxystearinsäureestern der Formel III

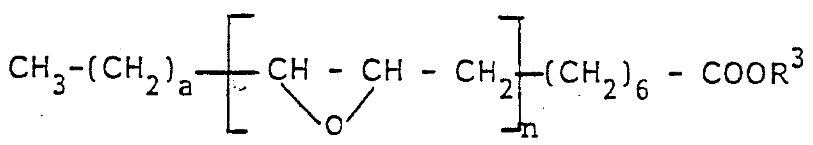

III

mit Di- und Triaminen der Formel IV

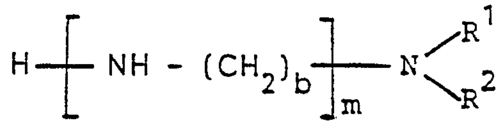

IV

hergestellt. Dabei haben a, b, m, n, $R^1$ und $R^2$ dieselbe Bedeutung wie in den Formeln I und II. $R^3$ steht für einen Alkylrest mit 1 bis 5 Kohlenstoffatomen oder den Rest eines mehrwertigen Alkohols mit 2 bis 6 Kohlenstoffatomen, dessen übrige Hydroxylgruppen ebenfalls mit Epoxyfettsäureestern, gegebenenfalls auch mit gesättigten und ungesättigten Fettsäureestern verestert sind. Die Epoxystearinsäureester der Formel III werden mit wenigstens n + 1 Mol eines Amins der Formel IV gegebenenfalls in Gegenwart eines polaren Lösungsmittels bei Temperaturen von 130 bis 200 °C umgesetzt. Flüchtige Nebenprodukte werden nach beendeter Reaktion abgetrennt.

Werden die Epoxystearinsäureester der Formel III mit den Aminen der Formel IV in einem Lösungsmittel miteinander umgesetzt, so sind hierfür besonders die niederen Alkohole wie Methanol, Ethanol, Isopropanol, aber auch Ethylenglykol oder Glycerin geeignet. Diese Alkohole können auch mit Wasser gemischt werden. Auch ein Zusatz katalytischer Mengen von Alkalien wie z.B. Natriumhydroxid ist zweckmäßig.

In den Epoxystearinsäureestern der Formel III besteht die Säurekomponente aus epoxidierter Ölsäure, Linolsäure oder Linolensäure, d.h. aus epoxidierten Fettsäuren der Kettenlänge $C_{18}$. Die genannten Säuren enthalten je nach ihrer Herkunft auch Anteile von ungesättigten $C_{14}$-, $C_{16}$-, $C_{20}$-oder $C_{22}$-Fettsäuren in untergeordneten Mengen von insgesamt bis zu 25 Gew.-%. Wegen ihrer guten Zugänglichkeit sind die Epoxyester der Formel III, die sich von der in zahlreichen natürlichen Fetten vorkommenden Ölsäure ableiten, als Ausgangsmaterial für die Herstellung der erfindungsgemäß zu verwendenden Verbindungen von besonderem praktischem Interesse.

Die Alkoholkomponente der Verbindungen der Formel III besteht aus niederen aliphatischen Alkoholen wie Methanol, Ethanol, Propanol, Isopropanol, n-Butanol und n-Pentanol oder aus aliphatischen Di-und Polyolen wie z.B. Ethylenglykol, Propylenglykol, Hexandiol-(1,6) und Glycerin.

Als Ester der Formel III werden die epoxidierten Fettsäureester von einwertigen Alkoholen mit 1 bis 5 Kohlenstoffatomen, insbesondere die Methylester, bevorzugt zur Herstellung der erfindungsgemäß zu verwendenden Verbindungen eingesetzt.

Geht man bei der Herstellung der erfindungsgemäß zu verwendenden Verbindungen der Formel I von epoxidierten Estern mehrwertiger Alkohole aus, insbesondere von Triglyceriden, wie sie aus natürlichen Fettsäurequellen zugänglich sind, dann können im Reaktionsprodukt auch noch Glycerin oder Fettsäureteilglyceride vorhanden sein, wodurch die vorteilhafte Wirkung der Verfahrensprodukte praktisch nicht beeinträchtigt wird. Bei diesen als Nebenprodukten anfallen den Fettsäurederivaten von gesättigten oder ungesättigten Fettsäuren handelt es sich um solche, die im allgemeinen 10 bis 22, insbesondere 12 bis 18 Kohlenstoffatome enthalten.

Es ist demnach nicht erforderlich, die den Epoxyverbindungen der Formel III zugrunde liegenden reinen Ölsäure-, Linolsäure-und Linolensäureester einzusetzen; vielmehr können als Ausgangs stoffe epoxierte Fettsäureestergemische eingesetzt werden, wie sie aus den natürlichen Pflanzen-und Tierfetten, wie z.B. Olivenöl, Sojaöl, Rüböl, Baumwollsaatöl, Leinöl, Talg, Fischölen, Tallöl usw. anfallen.

Bei den Aminen der Formel IV handelt es sich um aliphatische Diamine und Triamine, wie z.B. Ethylendiamin, Trimethylendiamin, Tetramethylendiamin, Pentamethylendiamin, Hexamethylendiamin, Diethylentriamin und Dipropylentriamin sowie um deren unsymmetrisch substituierte Mono-und Dialkylderivate wie z.B. N,N-Dimethylaminoethylamin, N,N-Dimethylaminopropylamin oder N-Dodecylaminopropylamin.

Bei den erfindungsgemäß zu verwendenden Produkten handelt es sich beispielsweise um das Umsetzungsprodukt von Epoxystearinsäuremethylester mit Ethylendiamin, d.h. um ein Gemisch der N-(2-Aminoethyl)-amide der 9-(2-Aminoethylamino)-10-hydroxystearinsäure und der 10-(2-Aminoethylamino)-9-hydroxystearinsäure, ferner um die entsprechenden, durch Umsetzung dieses Epoxyesters mit Trimethylendiamin, Tetramethylendiamin, Pentamethylendiamin, Hexamethylendiamin, Diethylentriamin, N,N-Dimethylethylendiamin, N,N-Dimethylaminopropylamin und N-Dodecylaminopropylamin hergestellten Aminohydroxystearinsäureamide. Weiterhin sind zu nennen: Das Umsetzungsprodukt aus epoxidiertem Olivenölfettsäuremethylester und Trimethylendiamin; das Umsetzungsprodukt aus dem epoxidierten Methylester der Tallölfettsäuren mit N,N-Dimethylethylendiamin; das Umsetzungsprodukt aus dem Gemisch von 50 Gew.-% epoxidiertem Talgölfettsäuremethylester und 50 Gew.-% epoxidiertem Sojafettsäuremethylester mit Hexamethylendiamin; das Umsetzungsprodukt aus dem Gemisch von 70 Gew.-% epoxidiertem Sojafettsäuremethylester und 30 Gew.-% epoxydiertem Fischölsäuremethylester mit Dipropylentri amin und das Umsetzungsprodukt aus epoxidiertem Olivenöl mit Ethylendiamin.

Bei den mehrfunktionellen Epoxidverbindungen, die mit den erfindungsgemäß einzusetzenden Vernetzungsmitteln zu hochmolekularen Verbindungen reagieren, handelt es sich um unter dem allgemeinen Namen Epoxidharze bekannte verschiedenartig aufgebaute Substanzklassen. Darunter fallen beispielsweise die durch Epoxidation aus cycloaliphatischen Kohlenwasserstoffen entstehenden Epoxidverbindungen oder aber auch das Triglycidylisocyanurat sowie insbesondere die durch Umsetzung aus mehrwertigen Phenolen, z.B. Diphenylolpropan mit Epichlorhydrin herstellbaren flüssigen bis festen Glycidylether. Epoxidharze werden als Basis für die verschiedenartigsten Anwendungszwecke eingesetzt, insbesondere auch als Klebstoffe und Überzugsmittel für die verschiedenartigsten Werkstoffe. Sie können in Form von Lacklösungen oder als sogenannte Pulverlacke verarbeitet werden. Sehr verbreitet ist insbesondere der Einsatz zum Kleben von Metallen bzw. metallischen Flächen sowie solchen aus Glas, Porzellan, Keramik, Holz sowie thermoplastischen und duroplastischen Kunststoffen.

Die Epoxidharze werden üblicherweise durch die Epoxidzahl oder das Epoxidäquivalent und die Aminohydroxystearinsäureamide durch die Aminzahl oder das Aminäquivalent charakterisiert. Zur Erzielung einer guten Vernetzung bei Klebstoffen und Überzugsmitteln setzt man soviel von den Reaktanten ein, daß auf 100 Epoxidäquivalente etwa 90 bis 150 Aminäquivalente entfallen.

Die reagierenden Gemische können als Klebstoffe sowohl für metallische Flächen als auch solche aus Glas, Porzellan, Keramik, Holz sowie thermoplastische und duroplastische Kunststoffe verwendet werden. Die Topfzeit der Gemische liegt etwa zwischen 10 Minuten bis zu etwa 1 bis 2 Stunden je nach Raumtemperatur und Größe des Ansatzes. Die eigentliche Vernetzung (Härtung) kann bei Temperaturen zwischen 5 °C und 120 °C bis 180 °C vorgenommen werden. Entsprechend den allgemein bekannten Regeln ist die Reaktionsgeschwindigkeit der Vernetzungsreaktion von der Temperatur und eventuellen weiteren Zusätzen zum Gemisch abhängig und kann zwischen wenigen Minuten bis zu einigen Tagen - schwanken.

## Beispiele

A) Nicht erfindungsgemäße Herstellung der Aminohydroxystearinsäureamide

In einer 6-l-Rührapparatur wurden 980,9 g (3,35 Mol) Epoxystearinsäuremethylester (M 293, ber. aus VZ 191,5; EpOZ 4,78) und 2 636,7 g (20,1 Mol) Dipropylentriamin unter Rühren und Stickstoffabdeckung auf 200 °C erhitzt. Ab 175 °C begann eine Methanolabspaltung. Das entstandene Methanol (114,4 g) wurde über einen Wasserabscheider abgezogen. Nach Erreichen von 200 °C wurde 4,5 Std. auf dieser Temperatur gehalten. Anschließend wurde überschüssiges Dipropylentriamin abdestilliert (12 bis 0,7 mbar, 200 °C). Insgesamt wurden 1 951 g zurückgewonnen. Es wurde eine zähe, gelbliche Flüssigkeit (Reaktionsprodukt I: 1 552 g; Epoxidzahl 0,89; Aminzahl 360) erhalten.

In gleicher Weise wurde aus Epoxystearinsäuremethylester und Diethylentriamin ein Aminohydroxystearinsäureamid (Reaktionsprodukt II) gewonnen mit einer Aminzahl von 323 und einer Epoxidzahl von 0,37.

B) Herstellung von Metallverklebungen

Als Epoxidharz wurde ein Gemisch aus 80 Gewichtsteilen eines modifizierten handelsüblichen Diglycidylethers von Diphenylolpropan (Epoxidäquivalent 195) und 20 Gewichtsteilen eines unmodifizierten Diglycidylethers von Diphenylolpropan (Epoxidäquivalent 186) eingesetzt.

1) Von Reaktionsprodukt I wurden jeweils 10 Gewichtsteile mit

a) 10 Gewichtsteilen Epoxidharzgemisch und

b) 7,5 Gewichtsteilen Epoxidharzgemisch

homogen vermischt. Die Topfzeit betrug 20 Minuten. Damit wurden sandgestrahlte und entfettete Eisenbleche der Abmessung 100 · 25 · 1 mm überlappend 1 cm verklebt und nach verschiedener Zeit die Scherfestigkeit nach DIN 53281/3 gemessen. In der nachfolgenden Tabelle 1 ist in Abhängigkeit von der Menge des eingesetzten Gemisches und der Lagerung die Zugscherfestigkeit (N/mm²) wiedergegeben. Die Werte sind der Durchschnitt von jeweils 20 Messungen.

Tabelle 1

| Gemisch | nach 1 Tag 22-23 °C N/mm² | nach 7 Tagen 22-23 °C N/mm² | nach 30 Minuten bei 80 °C + 24 Stunden bei 22-23 °C N/mm² |
|---|---|---|---|
| a) | 18-20 | 19-22 | 29-35 |
| b) | 20-22 | 20-23 | 25-33 |

2) Vom Reaktionsprodukt II wurden jeweils 10 Gewichtsteile mit
a) 10 Gewichtsteilen Epoxidharzgemisch und
b) 7,5 Gewichtsteilen Epoxidharzgemisch
homogen vermischt. Die Topfzeit betrug 40 Minuten. Wie vorstehend beschrieben, wurden Eisenbleche verklebt und die Zugscherfestigkeit bestimmt (DIN 52 281/3). In der nachstehenden Tabelle 2 ist in Abhängigkeit von der Menge des eingesetzten Gemisches und der Lagerung die Breite der bei jeweils 25 Messungen gefundenen Zugscherfestigkeit/N/mm²) wiedergegeben.

Tabelle 2

| Gemisch | nach 1 Tag 22-23 °C N/mm² | nach 7 Tagen 22-23 °C N/mm² | nach 30 Minuten bei 80 °C + 24 Stunden bei 22-23 °C N/mm² |
|---|---|---|---|
| a) | 7- 9 | 10-13 | 25-33 |
| b) | 10-15 | 15-25 | 20-33 |

**Ansprüche**

1) Verwendung von Aminohydroxyfettsäureamiden herstellbar durch Kondensation aus epoxidierten Fettsäurealkylestern und mehrwertigen aliphatischen Oligoaminen als Vernetzungsmittel für mehrfunktionelle Epoxidverbindungen.

2) Verwendung von Aminohydroxyfettsäureamiden gemäß Anspruch 1 nach der Formel I

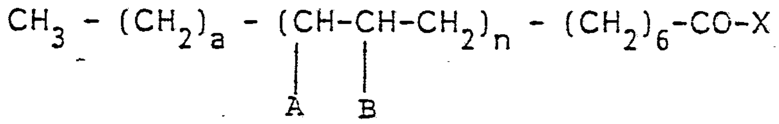

I

in der die Komnbinationen n = 1 und a = 7, oder n = 2 und a = 4, oder n = 3 und a = 1 gelten und von den Substituenten A und B jeweils einer eine Hydroxylgruppe bedeutet, während der verbleibende Substituent B oder A und der Substituent X einen Rest der Formel II darstellt,

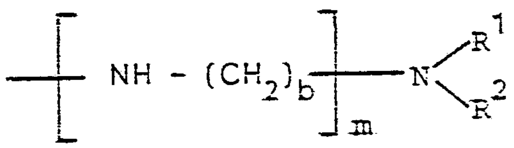

II

in der b ganze Zahlen von 2 bis 6, m 1 oder 2, $R^1$ und $R^2$ unabhängig voneinander Wasserstoff oder einen Alkylrest mit 1 bis 12 Kohlenstoffatomen bedeuten, als Vernetzungsmittel für mehrfunktionelle Epoxidverbindung.

3) Verwendung von Aminohydroxystearinsäureamiden nach Ansprüchen 1 und 2 als Vernetzungsmittel (Härter) für Klebstoffe und/oder Überzugsmittel auf Basis von Epoxidharzen.

4) Verwendung von Aminohydroxystearinsäureamiden nach einem der Ansprüche 1 bis 3, wobei auf 100 Epoxidäquivalente etwa 90 bis 150 Aminäquivalente entfallen.

5) Verwendung der Gemische aus Aminohydroxyfettsäureamiden und mehrfunktionellen Epoxidverbindungen nach einem der Ansprüche 1 bis 4 Klebstoffe für metallische Flächen sowie solche aus Glas, Porzellan, Keramik, Holz sowie thermoplastischen und duroplastischen Kunststoffen.